# EUROPÄISCHE PATENTANMELDUNG

(11) **EP 1 527 673 A1**
(43) Veröffentlichungstag der Anmeldung: **04.05.2005**
(21) Anmeldenummer: 04025364.3
(22) Anmeldetag: 26.10.2004
(51) Int. Cl.: A01D 78/10

(54) **Kreiselschwader**

(30) Priorität: 31.10.2003 DE 10351272
(71) Anmelder: CLAAS Saulgau GmbH, 88348 Bad Saulgau (DE)
(72) Erfinder: Geng, Manfred, 88348 Bad Saulgau (DE)

(57) **Zusammenfassung**

Kreiselschwader zum Zusammenrechen von am Boden liegendem Erntegut, ausgebildet als Seitenschwader mit um in Arbeitsstellung quer zur Fahrtrichtung um Abstandsmaße zueinander versetzten Schwadkreiseln die um etwa vertikale Achsen umlaufend antreibbar in Fahrtrichtung hintereinander gestaffelt angeordnet und am Boden durch Laufräder abgestützt sind, und deren Schwadkreisel durch Hochschwenken um etwa horizontal verlaufende Schwenkachsen von Klappgelenken aus einer Arbeitsstellung in eine Transportstellung bringbar sind, wobei die Schwadkreisel mit einem Fahrgestell verbunden sind, wobei das Fahrgestell mittels einer Kupplungsvorrichtung zum Anschluss an ein Zugfahrzeug um eine Hochachse verschenkbar in einem Vertikalgelenke mit dem Fahrgestell zur Übertragung der Zugkraft des Zugfahrzeugs verbunden ist, wobei dem vorderen Schwadkreisel (8) und dem mittleren Schwadkreisel (7) ein deichselbildender Längsträger (21) zugeordnet ist, an dem die Ausleger (10,11) in Klappgelenken (15,16) angelenkt sind, und dem mittleren Schwadkreisel (7) ein Fahrwerk (4) nachgeordnet ist, auf dem der rückwärtige Teil des deichselbildenden Längsträgers (21) gegenüber dem Boden abgestützt ist, und wobei dem Fahrwerk (4) wenigstens ein weiterer hinterer Schwadkreisel (6) nachgeordnet ist.

## Beschreibung

Die Erfindung betrifft einen Kreiselschwader gemäß dem Oberbegriff des unabhängigen Anspruchs 1.

Der wachsende Wettbewerbsdruck auf dem Agrarsektor der Grünfutterernte verlangt ständig nach leistungsfähigeren Maschinen mit größeren Arbeitsbreiten, die sich nach der Straßenfahrt aus der Transportstellung schnell und möglichst ohne den Führerstand des Traktors verlassen zu müssen, in die Betriebsstellung überführen lassen. Eine weitere und ebenfalls wichtige Forderung ist die Hangtauglichkeit derartiger Maschinen, und gemeint ist damit die Spurtreue in hängigem Gelände. Ist diese Spurtreue nicht gegeben, so driften derartige gezogenen Maschinen gegenüber der Spur des Traktors etwa quer zur Fahrtrichtung der Neigung des Hangs folgend, in diese Richtung ab.

Die Aufgabe dieser Erfindung ist es daher, einen Seitenschwader als 3-Kreiselschwader mit günstigen Fahreigenschaften generell zu schaffen, aber insbesondere zur Verbesserung der Fahrstabilität in Hanglagen und im öffentlichen Straßenverkehr.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht vor, die Schwadkreisel eins 3-Kreiselschwaders so mit einem Fahrgestell in Verbindung zu bringen, dass die beiden vorderen Schwadkreisel an einem durchgehende deicheselbildenden Längsholm seitlich angelenkt sind, und nachfolgend dieser beiden vorderen Schwadkreisel aber vor dem dritten Schwadkreisel ein Fahrwerk vorgesehen ist, welches das Fahrgestell unabhängig von den Schwadkreiseln gegenüber dem Boden abstützt.

Dieses ermöglicht eine großzügige Dimensionierung des Fahrwerks mit entsprechenden bereiften Stützrädern, welche die Gewichtskraft des Fahrgestells aufnehmen. Dieses erzeugt in Verbindung mit einer großzügigen Dimensionierung der Bereifung des Fahrgestells die gewünschte hohe Fahrstabilität, sowohl im Betriebszustand als auch während der Transportfahrt auf öffentlichen Strassen und Wegen.

Nähere Einzelheiten der Erfindung sind den nachfolgenden Figurendarstellungen und deren Beschreibungen zu entnehmen.

Es zeigen:
- Fig. 1: zeigt ein Ausführungsbeispiel der Erfindung dargestellt am Beispiel eines gezogenen Kreiselschwaders in einer Draufsicht in Arbeitsstellung
- Fig. 2: zeigt den Kreiselschwader gemäß Fig.1 in einer Draufsicht in einer Zwischenstellung zur Überführung in die Transportstellung
- Fig. 3: zeigt den Kreiselschwader gemäß Fig.1 in einer Draufsicht mit hochgeklappten Schwadkreiseln in seiner endgültigen Transportstellung
- Fig. 4: zeigt ein anders Ausführungsbeispiel der Erfindung dargestellt am Beispiel eines gezogenen Kreiselschwaders in einer Draufsicht in Arbeitsstellung
- Fig. 5: zeigt den Kreiselschwader gemäß Fig.4 in einer Draufsicht in einer Zwischenstellung zur Überführung in die Transportstellung
- Fig. 6: zeigt den Kreiselschwader gemäß Fig.4 in einer Draufsicht mit hochgeklappten Schwadkreiseln in seiner endgültigen Transportstellung
- Fig. 7: zeigt ein anders Ausführungsbeispiel der Erfindung dargestellt am Beispiel eines gezogenen Kreiselschwaders in einer Draufsicht in Arbeitsstellung
- Fig. 8: zeigt den Kreiselschwader gemäß Fig.7 in einer Draufsicht in einer Zwischenstellung zur Überführung in die Transportstellung
- Fig.9: zeigt den Kreiselschwader gemäß Fig.7 in einer Draufsicht mit hochgeklappten Schwadkreiseln in seiner endgültigen Transportstellung

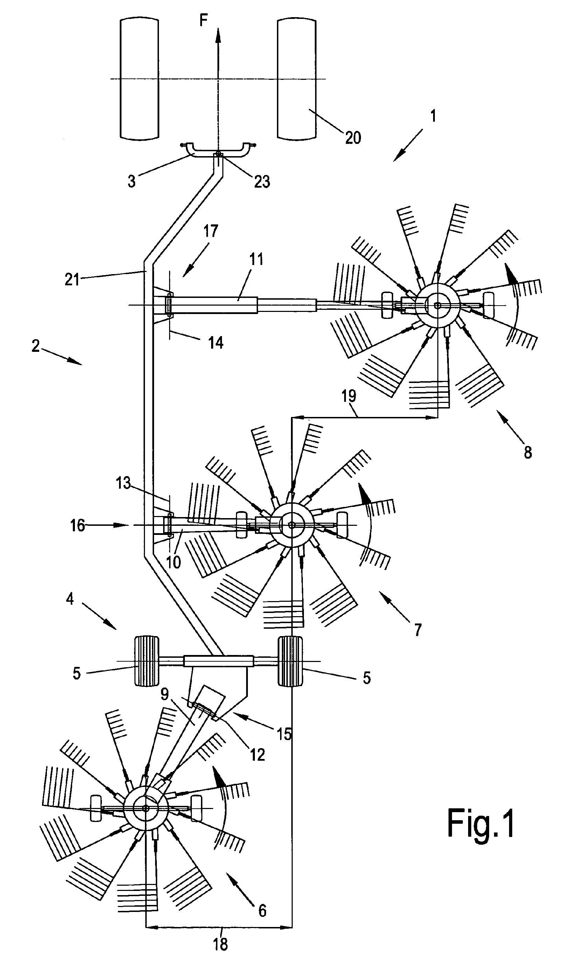

Fig. 1 zeigt ein Ausführungsbeispiel der Erfindung am Beispiel eines gezogenen Kreiselschwaders 1, ausgeführt als Seitenschwader mit drei am Boden über Laufräder abgestützten Schwadkreiseln 6,7,8 in einer Draufsicht in seiner Arbeitsstellung im ausgeklappten Zustand der Schwadkreisel 6,7,8. Der Kreiselschwader 1 ist mittels einer Kupplungsvorrichtung 3 an einem Zugfahrzeug 20, beispielsweise ein Traktor, angehängt. Das Gespann Kreiselschwader 1 und Zugfahrzeug 20 ist in Geradeausfahrt in Fahrtrichtung F ausgerichtet.

Das Fahrgestell 4 des Kreiselschwaders 1 besteht im Wesentlichen aus der Anschlussvorrichtung 3, die in dem Vertikallager 23 mit dem deichselbildenden Längsholm 21 verbunden ist. Endseitig ist der deichselbildenden Längsholm 21 mit einem Fahrwerk 4 verbunden, an dem sich dieser gleichzeitig gegenüber dem Boden auf den Stützrädern 5 abstützt. Das Fahrwerk 4 kann sowohl in bekannter weise lenkbar mit der Anschlussvorrichtung 3 verbunden sein, oder, wie im Beispiel dargestellt, als Starrdeichsel ausgeführt sein.

Der vordere Schwadkreisel 8 ist mittels eines längenveränderbahren vorderen Auslegers 11 an dem deichselbildenden Längsträger 21 im Klappgelenk 17, der mittlere Schwadkreisel 7 ist mittels eines mittleren Auslegers 10 an dem deichselbildenden Längsträger 21 im Klappgelenk 16 und der hintere Schwadkreisel 6 ist mittels eines hinteren Auslegers 9 im Klappgelenk 15 am Fahrwerk 4 des Fahrgestells 2 angelenkt. Jeder der Schwadkreisel 6,7,8 verfügt in bekannter weise über eigene Stütz- und Tasträder, die es den Schwadkreisel 6,7,8 ermöglichen, sich unabhängig von einander dem Bodenprofil folgend anzupassen. Die Schwadkreisel 6,7,8 nehmen längs der Fahrtrichtung einen Abstandsmaß 18,19 zueinander ein welches so bemessen ist, das die Arbeitsbreiten der Schwadkreisel 6,7,8 einen gemeinsamen Überdeckungsbereich besitzen.

Die Schwenkachsen 12,13,14 der Ausleger 9,10,11 verlaufen etwa horizontal zur Bodenoberfläche, und sie ermöglichen das Hochklappen der Schwadkreisel 6,7,8 um eben diese Schwenkachsen 12,13,14.

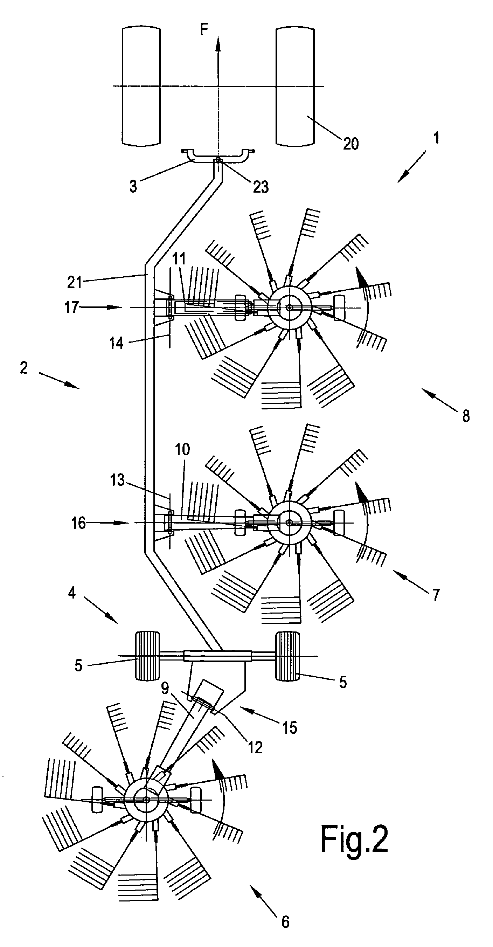

Fig. 2 zeigt ein Zwischenstellung des Kreiselschwaders 1 gemäß Fig.1 vor dem Hochklappen der Schwenkachsen 12,13,14. Dazu wurde der vordere längenveränderbare Ausleger auf sein Minimum verkürzt und damit wurde der Schwadkreisel 8 entsprechend nahe an den deichselbildenden Längsholm 21 herangeführt.

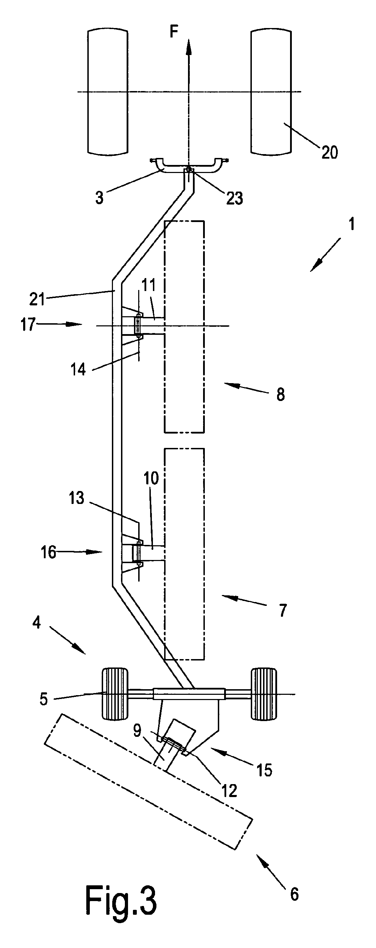

Fig. 3 zeigt den Kreiselschwaders 1 gemäß Fig.1 in seiner Transportstellung mit hochgeklappten Schwadkreisel 6,7,8.

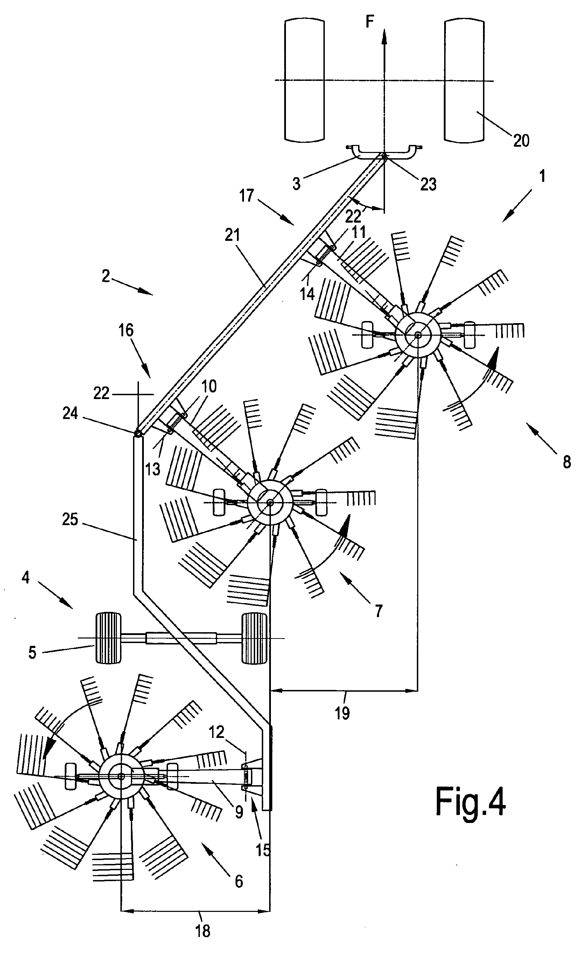

Fig. 4 zeigt ein anders Ausführungsbeispiel der Erfindung dargestellt am Beispiel eines gezogenen Kreiselschwaders 1 in einer Draufsicht in Arbeitsstellung. In diesem Ausführungsbeispiel ist auf die Längenveränderbarkeit des vorderen Auslegers 11 verzichtet worden. Statt dessen ist das Fahrgestell 2 so ausgebildet, dass der deichselbildende Längsträger 21 in seiner Längserstreckung zweiteilig ausgeführt ist und wobei der zweite Teil durch eine Z-förmige Verlängerung 25 mittels eines Vertikalgelenks 24 mit dem vorderen Teil des deichselbildende Längsträger 21 verschwenkbar um den Anstellwinkel 22' verbunden ist. Dabei stützt sich die Verlängerung 25 wiederum auf das Fahrwerk 4 mit seinen Stützrädern 5 gegenüber dem Boden ab.

Diese Ausführungsform ermöglicht eine Verschwenken des deichselbildenden Längsträgers 21 um den Anstellwinkel 22 um die Schwenkachsen der Vertikalgelenke 23 und 24 und damit eine Schrägstellung des deichselbildenden Längsträgers 21 relativ zur Fahrtrichtung F

Diese Ausführung ermöglicht es weiterhin, dass beide Ausleger, der vordere Ausleger 8 und der mittlere Ausleger 7 gleich ausgeführt sein können, Die Abstände der Schwadkreisel 6,7,8 mit den Abstandsmaßen 18 und 19 werden durch das relative Verschwenken des deichselbildenden Längsträgers 21 um die vertikalen Schenkachsen der Vertikalgelenke 23 bzw. 24 verursacht und eingestellt. Dabei kann auch der Ausleger 9 völlig identisch zu den Auslegern 10 und 11 ausgeführt sein. In diesem Ausführungsbeispiel weisen die Ausleger 9,10 und 11 teils in unterschiedliche Richtungen. Während die Ausleger 10 und 11 zwar parallel zueinander verlaufen, weist die Ausrichtung ihrer Längserstreckung relativ zur Fahrtrichtung teils nach rechts und teils nach hinten, wohingegen der Ausleger 9 relativ zur Fahrtrichtung in seiner Längserstreckung ausschließlich nach links weist.

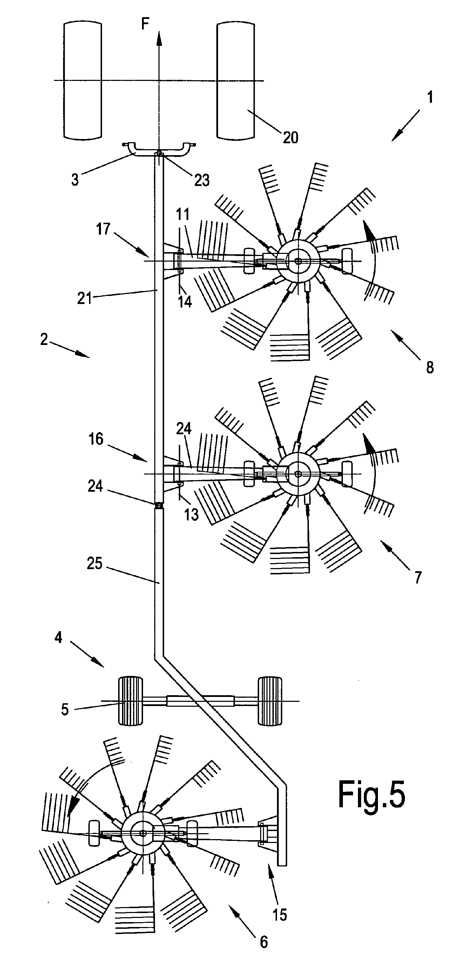

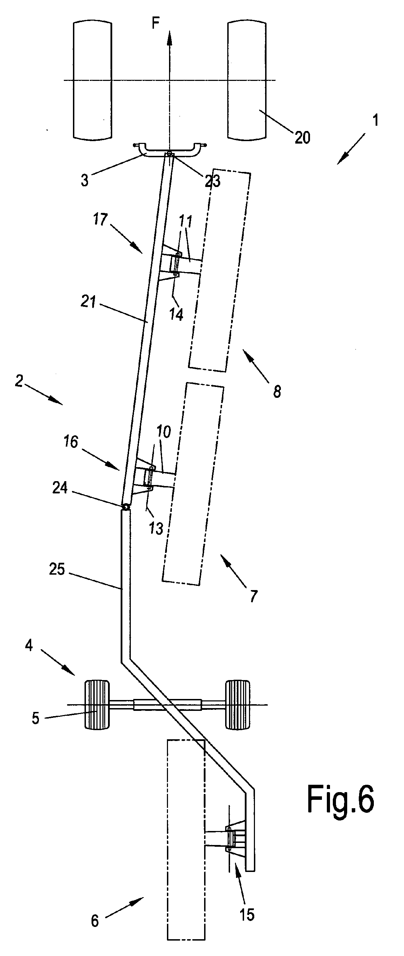

Fig. 5 zeigt ein Zwischenstellung des Kreiselschwaders 1 gemäß Fig.4 vor dem Hochklappen der Schwenkachsen 12,13,14. Dazu wurde der deichselbildende Längsträgers 21 um den Betrag des Anstellwinkels 22 wieder relativ um die Vertikalgelenke 23,24 zurück verschwenkt, so dass der vordere Schwadkreisel 8 und der mittlere Schwadkreisel 7 in Fahrtrichtung etwa hintereinander liegen. Gemäß Fig. 6 können die Schwadkreisel dann in ihre endgültige Transportstellung hochgeklappt werden.

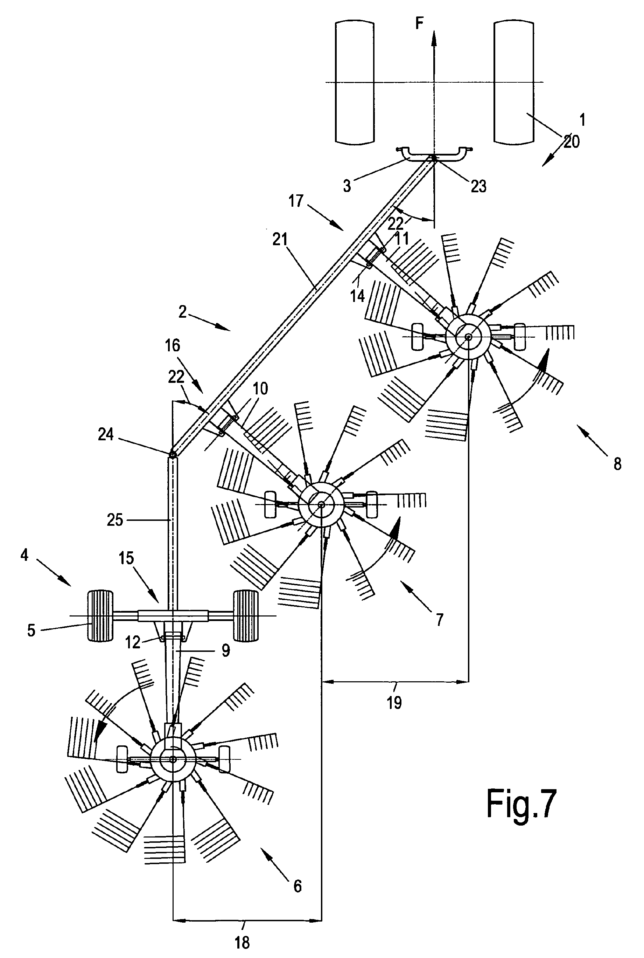

Fig. 7 zeigt ein Variante zu dem Ausführungsbeispiel der Erfindung gemäß Fig.4 am Beispiel eines gezogenen Kreiselschwaders in einer Draufsicht in Arbeitsstellung. Dabei ist der Ausleger 9 mit seinem Klappgelenk 15 direkt an das Fahrgestell 4 angeschlossen. Dabei verläuft die Längserstreckung des Auslegers etwa parallel zur Fahrtrichtung F.

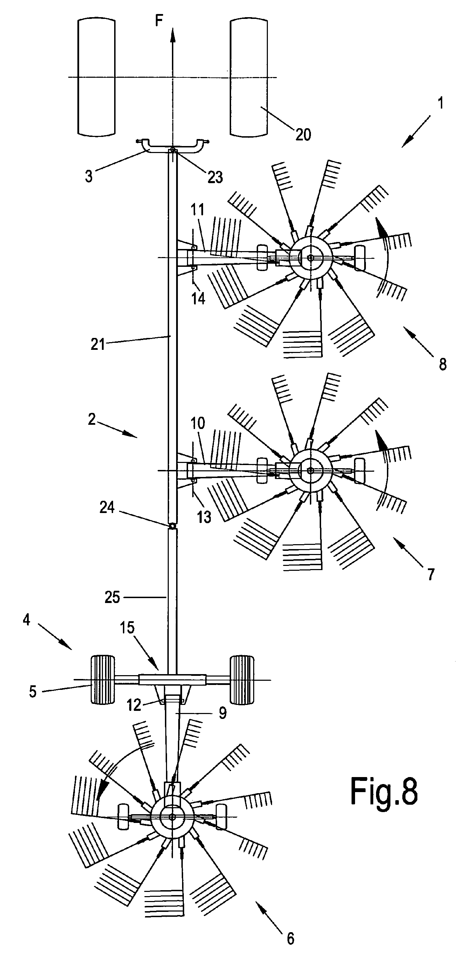

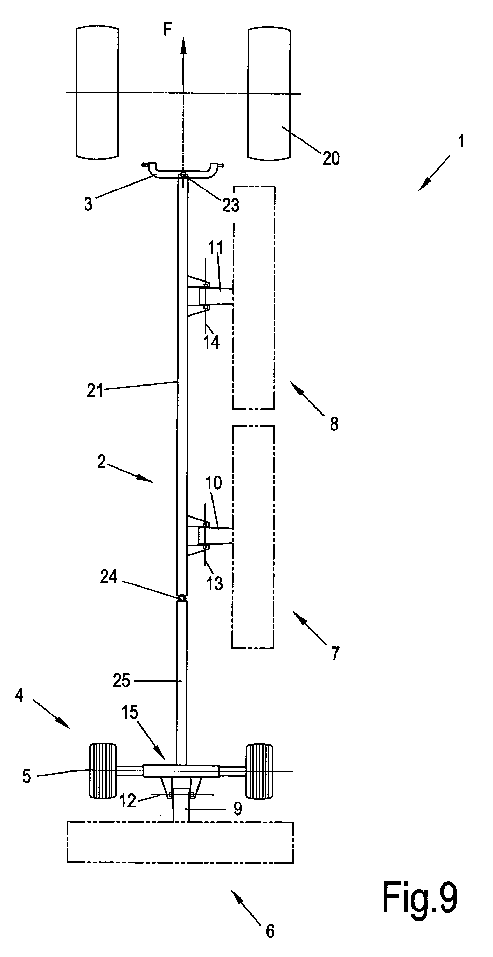

Fig. 8 wiederum zeigt ein Zwischenstellung des Kreiselschwaders 1 gemäß Fig.7 vor dem Hochklappen der Schwenkachsen 12,13,14. Dazu wurde der deichselbildende Längsträgers 21 ebenfalls Analog Fig. 5 um den Betrag des Anstellwinkels 22 wieder relativ um die Vertikalgelenke 23,24 zurück verschwenkt, so dass der vordere Schwadkreisel 8 und der mittlere Schwadkreisel 7 in Fahrtrichtung etwa hintereinander liegen. Gemäß Fig. 9 können die Schwadkreisel dann in ihre endgültige Transportstellung hochgeklappt werden.

Das Vertikalgelenk 24 kann demnach wahlweise verschwenk- oder feststellbar sein, und im festgestellten Zustand sowohl Zug- Druck- als Querkräfte aufnehmen und somit als Bindeglied zwischen dem deichselbildenden Längsholm (21) und dem Fahrwerk (4) fungieren. Dabei kann das Fahrwerk 4 die Seitenkräfte, die beispielsweise am Hang im geneigten Gelände auftreten können, gegenüber dem Boden abstützen, und somit zur Fahrstabilität und Spurtreue beitragen.

Die Ausführung der Stellantriebe zur Herbeiführung der Schwenk- und Klappvorgänge und deren Arretierungen lassen sich in besonders vorteilhafter Weise als hydraulische Stellantriebe ausführen. Der Übersicht halber wurde auf deren Darstellung verzichtet, da die Ausgestaltung derartiger Stellantriebe ein auf diesem Sektor tätigen Fachmanns diesem durchaus geläufig ist und daher dieses im Wissen und Können des Fachmanns liegt und daher nicht der näheren Erläuterung bedarf.

### Bezugszeichenliste

- 1: Kreiselschwader
- 2: Fahrgestell
- 3: Kupplungsvorrichtung
- 4: Fahrwerk
- 5: Stützrad
- 6: hinterer Schwadkreisel
- 7: mittlerer Schwadkreisel
- 8: vorderer Schwadkreisel
- 9: hintere Ausleger
- 10: mittlerer Ausleger
- 11: vorderer Ausleger
- 12: Klappachse
- 13: Klappachse
- 14: Klappachse
- 15: Klappgelenk
- 16: Klappgelenk
- 17: Klappgelenk
- 18: Abstandsmaß
- 19: Abstandsmaß
- 20: Zugfahrzeug
- 21: deichselbildender Längsträger
- 22,22': Anstellwinkel
- 23: Vertikalgelenk
- 24: Vertikalgelenk
- 25: Deichselverlängerung

## Patentansprüche

1. Kreiselschwader zum Zusammenrechen von am Boden liegendem Erntegut, ausgebildet als Seitenschwader mit um in Arbeitsstellung quer zur Fahrtrichtung um Abstandsmaße zueinander versetzten Schwadkreiseln die um etwa vertikale Achsen umlaufend antreibbar in Fahrtrichtung hintereinander gestaffelt angeordnet und am Boden durch Laufräder abgestützt sind, und deren Schwadkreisel durch Hochschwenken um etwa horizontal verlaufende Schwenkachsen von Klappgelenken aus einer Arbeitsstellung in eine Transportstellung bringbar sind, wobei die Schwadkreisel mit einem Fahrgestell verbunden sind, wobei das Fahrgestell mittels einer Kupplungsvorrichtung zum Anschluss an ein Zugfahrzeug um eine Hochachse verschenkbar in einem Vertikalgelenke mit dem Fahrgestell zur Übertragung der Zugkraft des Zugfahrzeugs verbunden ist, **dadurch gekennzeichnet, dass** dem vorderen Schwadkreisel (8) und dem mittleren Schwadkreisel (7) ein deichselbildender Längsträger (21) zugeordnet ist, an dem die Ausleger (10,11) in Klappgelenken (15,16) angelenkt sind, und dem mittleren Schwadkreisel (7) ein Fahrwerk (4) nachgeordnet ist, auf dem der rückwärtige Teil des deichselbildenden Längsträgers (21) gegenüber dem Boden abgestützt ist, und wobei dem Fahrwerk (4) wenigstens ein weiterer hinterer Schwadkreisel (6) nachgeordnet ist.

2. Kreiselschwader (1) nach Anspruch 1, **dadurch gekennzeichnet, dass** wenigstens dem vorderen Schwadkreisel (8) ein längenveränderbarer Ausleger (11) zugeordnet ist.

3. Kreiselschwader (1) nach Anspruch 3, **dadurch gekennzeichnet, dass** die Längenveränderung durch einen teleskopierbaren Ausleger (11) erzeugbar ist.

4. Kreiselschwader (1) nach Anspruch 1, **dadurch gekennzeichnet, dass** das Fahrgestell (2) einen deichselbildenden Längsträger (21), eine Deichselverlängerung (25), und ein die Deichselverlängerung (25) aufnehmendes Fahrwerk (4) umfasst, und dass der deichselbildende Längsträger (21) um die Hochachse des Vertikalgelenks (23) der Kupplungsvorrichtung (3), und die Deichselverlängerung (25) um die Hochachse des Vertikalgelenks (24) um einen Anstellwinkel (22) verschwenkbar sind.

5. Kreiselschwader (1) nach Anspruch 4, **dadurch gekennzeichnet, dass** der Freiheitsgrad der Schwenkbewegung um die Hochachse des Vertikalgelenks (24) wahlweise freischaltbar oder feststellbar ist.

6. Kreiselschwader (1) nach Anspruch 4, **dadurch gekennzeichnet, dass** das Vertikalgelenk (24) dem Fahrwerk (4) in Fahrtrichtung (F) gesehen, vorgelagert ist.

7. Kreiselschwader (1) nach Anspruch 1 und 2, **dadurch gekennzeichnet, dass** der Abstand (19) zwischen dem vorderen Schwadkreisel (8) und dem mittleren Schwadkreisel (7) durch die Längenveränderbarkeit des vorderen Auslegers (11) erzeugt wird.

8. Kreiselschwader (1) nach Anspruch 1 und 4, **dadurch gekennzeichnet, dass** der Abstand (19) zwischen dem vorderen Schwadkreisel (8) und mittleren Schwadkreisel (7) durch die Verschwenkung des deichselbildenden Längsholms (21) um einen Anstellwinkel (22) erzeugt wird.

9. Kreiselschwader (1) nach Anspruch 1, **dadurch gekennzeichnet, dass** der Abstand (18) zwischen dem hinteren Schwadkreisel (6) und dem mittleren Schwadkreisel (7) durch herunterklappen des hinteren Auslegers (9) und des mittleren Auslegers (10) erzeugt wird.

10. Kreiselschwader (1) nach Anspruch 1, **dadurch gekennzeichnet, dass** der Abstand (18) zwischen dem hinteren Schwadkreisel (6) und dem mittleren Schwadkreisel (7) durch herunterklappen des hinteren Auslegers (9) und des mittleren Auslegers (10) und durch Verschwenken des deichselbildenden Längsträgers (21) erzeugt wird

11. Kreiselschwader (1) nach Anspruch 1 in Verbindung mit einem oder mehreren der vorhergehenden Ansprüche, **dadurch gekennzeichnet, dass** in der Arbeitsstellung des Kreiselschwaders (1) der vordere Ausleger (11) und der mittlere Ausleger (10) der Schwadkreisel (7 und 8) eine etwa gleiche Ausrichtung in ihrer Längserstreckung aufweisen, und der hintere Ausleger (9) des hinteren Schwadkreisels (6) in seiner Längserstreckung eine von der Ausrichtung der Ausleger (10 und 11) erheblich verschieden Ausrichtung aufweist.
